Europäisches Patentamt

European Patent Office

Office européen des brevets

(11) Veröffentlichungsnummer: **0 142 122**
A2

(12) **EUROPÄISCHE PATENTANMELDUNG**

(21) Anmeldenummer: 84113384.6

(22) Anmeldetag: 06.11.84

(51) Int. Cl.⁴: **B 29 C 35/02**
B 29 C 33/02, B 29 C 43/12
//B29K21/00, B29L30/00

(30) Priorität: 10.11.83 DE 3340630

(43) Veröffentlichungstag der Anmeldung:
22.05.85 Patentblatt 85/21

(84) Benannte Vertragsstaaten:
AT DE FR GB IT

(71) Anmelder: Linde Aktiengesellschaft
Abraham-Lincoln-Strasse 21
D-6200 Wiesbaden(DE)

(72) Erfinder: Rebhan, Dieter, Ing. grad.
Pfaffenrieder Strasse 16
D-8192 Gelting(DE)

(74) Vertreter: Schaefer, Gerhard, Dr.
Linde Aktiengesellschaft Zentrale Patentabteilung
D-8023 Höllriegelskreuth(DE)

(54) Verfahren zur Herstellung von Formartikeln.

(57) Die Erfindung betrifft ein Verfahren zur Herstellung eines Formartikels aus einem Rohling mit einem im wesentlichen hohlen Innenraum. Dabei wird der Rohling in eine Form eingelegt, in den Innenraum ein elastisch verformbarer Heizbalg eingeführt, in den Heizbalg ein Fluid eingeleitet und der Rohling unter Druck und Wärmeeinwirkung verformt. Um eine im Vergleich zu herkömmlichen Verfahren wirtschaftlichere Herstellung von Formartikeln zu ermöglichen wird vorgeschlagen, in den Heizbalg ein inertes Gas einzuleiten und dem Rohling Wärme in Form elektrischer Energie durch Wärmeleitung oder Wärmestrahlung zuzuführen.

EP 0 142 122 A2

0142122

## Verfahren zur Herstellung von Formartikeln

Die Erfindung betrifft ein Verfahren zur Herstellung eines Formartikels aus einem Rohling mit einem im wesentlichen hohlen Innenraum, wobei der Rohling in eine Form eingelegt, in dem Innenraum ein elastisch verformbarer Heizbalg eingeführt, in den Heizbalg ein Fluid eingeleitet und der Rohling unter Druck und Wärmeeinwirkung verformt wird.

Ein derartiges Verfahren findet beispielsweise bei der Herstellung von vulkanisierten Reifen Anwendung. Bei der Heißvulkanisation vermischt man dazu Rohkautschuk mit feinverteiltem Schwefel und Vulkanisationsbeschleunigern und erhitzt auf 100 bis 180°C, damit der eigentliche Vulkanisationsprozeß vonstatten geht. Bei der Reifenherstellung erfolgt die Vulkanisation direkt bei der Formgebung der Vormischung, z.B. in beheizten Formen unter Druck.

Prinzipiell bestehen Pressen zum Formen und Vulkanisieren von Luftreifen aus einem unteren Pressentisch, auf dem die untere Hälfte der Vulkanisierform befestigt und aus einem oberen Querhaupt, an dem die obere Hälfte der Vulkanisierform angehängt ist. Entweder der Tisch oder das Querhaupt

ist zum Öffnen und Schließen der Vulkanisierform mittels eines Antriebs auf und ab bewegbar. Innerhalb der Vulkanisierform ist am Tisch oder am Querhaupt meistens ein Heizbalg angeordnet, durch den der Reifenrohling von innen radial gegen die Vulkanisierform gepreßt wird. Gleichzeitig wird er auch von innen geheizt. Die Vulkanisation ist ein zeit- und temperaturabhängiger Vorgang, der erst bei einer Temperatur von über 120°C mit einer meßbaren Geschwindigkeit abläuft. Im allgemeinen benötigt man auch noch einen höheren Druck, der von der Mischungszusammensetzung abhängt. So ist bei der Luftreifenheizung sowohl eine Außen- als auch eine Innenheizung erforderlich. Bei bekannten Verfahren erfolgt die Innenheizung mit Hilfe von Heißwasser, Heißdampf, Heißluft oder einer Mischung aus Heißdampf und Heißluft.

Die Energieverluste, die durch Erzeugung, Pufferung, Transport und Handling der obengenannten Wärmeträger entstehen, sind außerordentlich groß. Weiterhin ist die Anwesenheit von Sauerstoff bei hohen Temperaturen und Druck für die Standzeit des Heizbalges sehr schädlich. Luft hat eine sehr schlechte Wärmespeicherfähigkeit, was zu langen Vulkanisationszeiten führt. Sattdampf eignet sich wegen der auf Kondensations zurückzuführenden mangelhaften Druckkonstanz nur wenig für die Druckerzeugung. Die Druckregelbarkeit von Wasserdampf-Luftgemischen ist aufwendig. Der Bereitstellungsaufwand von Heißwasser ist sehr hoch.

Der Erfindung liegt daher die Aufgabe zugrunde, ein Verfahren der eingangs erläuterten Art anzugeben, daß eine im Vergleich zu herkömmlichen Verfahren wirtschaftlichere Herstellung von Formartikeln ermöglicht. Diese Aufgabe wird erfindungsgemäß dadurch gelöst, daß in den Heizbalg ein inertes Gas eingeleitet und dem Rohling Wärme in Form elektrischer Energie durch Wärmeleitung oder Wärmestrahlung zugeführt wird.

Beim erfindungsgemäßen Verfahren wird die dem Rohling über den Heizbalg zugeführte Wärme nicht über einen Wärmeträger, sondern direkt ohne wesentliche Verluste zugeführt. Bei dieser Verfahrensweise ergeben sich eine hohe Heizleistung und in der Folge eine geringe Vulkanisierzeit. Allein aufgrund der geringen Energieverluste und der kürzeren Herstellungsdauer ist das erfindungsgemäße Verfahren besonders wirtschaftlich. Darüber hinaus gelingt es durch die erfindungsgemäße Verwendung eines inerten Gases als Druckmedium den für die Standzeit eines Heizbalges schädlichen Sauerstoff auszuschließen. In der Regel wird daher die Standzeit eines Heizbalges gegenüber einem mit herkömmlichen Wärmeträgern gefüllten Heizbalg verlängert. Die Verwendung eines inerten Gases als Druckmedium ermöglicht weiterhin auf einfache Art und Weise ein konstantes Druckniveau innerhalb des Heizbalges aufrecht zu erhalten, wobei der Aufwand für die Bereitstellung des inerten Gases gering ist.

In einer vorteilhaften Ausgestaltung des erfindungsgemäßen Verfahrens wird dem Rohling Wärme über die Form mittels elektrischer Heizplatten oder Heizbänder zugeführt. Wurde die Außenform bisher wie der Heizbalg mittels eines erhitzten Fluids erwärmt, so wird in dieser Ausgestaltung die Form ebenfalls direkt mittels elektrischer Energie erhitzt.

Gemäß einer anderen Ausgestaltung der Erfindung wird dem Rohling Wärme durch Wärmeleitung mittels stromdurchflossener elektrischer Heizleiter zugeführt. Diese können erfindungsgemäß spiralförmig am Heizbalg angeordnet sein und in den Heizbalg einvulkanisiert, auf die Heizbalgoberfläche aufvulkanisiert oder aufgeklebt sein. Ein derartig mit Heizleitern versehener Heizbalg kann leicht verformt und in den Innenraum eines Rohlings eingeführt bzw. aus dem Innenraum des fertigen Formteils entfernt werden.

Nach einer vorteilhaften Variante des erfindungsgemäßen Verfahrens, in der die Wärme auf den Rohling mittels Wärmestrahlung, d.h. durch elektromagnetische Strahlung ohne Mitwirkung eines stofflichen Mediums übertragen wird, ist innerhalb des Heizbalges ein Wärmestrahler vorgesehen. Es ist selbstverständlich, daß der Wärmestrahler entweder so klein ist, daß er über die Öffnung in den Innenraum des Rohlings eingeführt und nach der Formgebung entfernt werden kann oder verstellbar ist, so daß er innerhalb des Heizbalges ein größeres Volumen einnimmt als beim Einführen und Entfernen aus dem Innenraum.

Nach einem weiteren vorteilhaften Merkmal des erfindungsgemäßen Verfahrens kann das inerte Gas vor dem Einleiten in den Heizbalg erwärmt werden. Durch diese Maßnahme kann eine besonders rasche Wärmeeinwirkung auf den Rohling erfolgen. Letztendlich dient das inerte Gas aber nicht maßgeblich als Wärmeträger sondern im wesentlichen nur als Druckmedium. Durch das inerte Gas wird einerseits eine Oxidation des Heizbalges vermieden, andererseits läßt sich der Druck innerhalb des Heizbalges auf sichere und einfache Weise konstant halten. Der Verlust an Wärme, der sich bei der Entlastung des inerten Gases nach der Formgebung einstellt, ist sehr gering.

Aufgrund seiner Verfügbarkeit und seiner relativ niedrigen Kosten hat sich Stickstoff als inertes Gas bewährt. Die Wärmespeicherfähigkeit des Stickstoffs ist zwar unwesentlich von der der Luft verschieden, jedoch dient der Stickstoff - wie bereits erläutert - nicht als Medium für den Wärmetransport, sondern als Druckmedium. Daher ist z.B. bei der Herstellung von Reifen die Vulkanisationszeit beim erfindungsgemäßen Verfahren wesentlich kürzer als bei herkömmlichen Verfahren mit Heißluft als Wärmeträger.

Bei der Vulkanisation von Reifen sind die bei herkömmlichen Verfahren anfallenden Energieverluste besonders hoch. Zudem sind die Heizbälge hochbeanspruchte Elemente. Das erfindungsgemäße Verfahren wird daher mit besonderem Vorteil bei der Herstellung vulkanisierter Reifen eingesetzt.

Zusammenfassend ist festzustellen, daß das erfindungsgemäße Verfahren aufgrund des hohen Wirkungsgrades, mit dem die Energie für die Erwärmung des Rohlings ausgenutzt wird, besonders wirtschaftlich ist. Die Wirtschaftlichkeit ist sogar dann gegeben, wenn die Standzeit eines Balges durch die Verwendung eines inerten Gases in Kombination mit der elektrischen Wärmeeinbringung nur gehalten und nicht verlängert werden könnte.

Patentansprüche

1. Verfahren zur Herstellung eines Formartikels aus einem
   Rohling mit einem im wesentlichen hohlen Innenraum, wobei der Rohling in eine Form eingelegt, in den Innenraum ein elastisch verformbarer Heizbalg eingeführt,
   in den Heizbalg ein Fluid eingeleitet und der Rohling
   unter Druck und Wärmeeinwirkung verformt wird, dadurch
   gekennzeichnet, daß in den Heizbalg ein inertes Gas
   eingeleitet und dem Rohling Wärme in Form elektrischer
   Energie durch Wärmeleitung oder Wärmestrahlung zugeführt wird.

2. Verfahren nach Anspruch 1, dadurch gekennzeichnet, daß
   dem Rohling Wärme über die Form mittels elektrischer
   Heizplatten oder Heizbänder zugeführt wird.

3. Verfahren nach Anspruch 1, dadurch gekennzeichnet, daß
   dem Rohling Wärme über den Heizbalg mittels elektrischer Heizleiter zugeführt wird.

4. Verfahren nach Anspruch 3, dadurch gekennzeichnet, daß
   die elektrischen Heizleiter in den Heizbalg einvulkanisiert, auf die Heizbalgoberfläche aufvulkanisiert
   oder aufgeklebt sind.

5. Verfahren nach Anspruch 1, dadurch gekennzeichnet, daß dem Rohling Wärme über Wärmestrahler innerhalb des Heizbalges zugeführt wird.

6. Verfahren nach einem der Ansprüche 1 bis 5, dadurch gekennzeichnet, daß das inerte Gas vor dem Einleiten in den Heizbalg erwärmt wird.

7. Verfahren nach einem der Ansprüche 1 bis 7, dadurch gekennzeichnet, daß das inerte Gas Stickstoff ist.

8. Anwendung des Verfahrens nach einem der Ansprüche 1 bis 7 auf die Herstellung von vulkanisierten Reifen.